(19) Europäisches Patentamt

European Patent Office

Office européen des brevets

(11) **EP 0 974 505 B1**

(12) **EUROPÄISCHE PATENTSCHRIFT**

(45) Veröffentlichungstag und Bekanntmachung des Hinweises auf die Patenterteilung:
**18.12.2002 Patentblatt 2002/51**

(51) Int Cl.⁷: **B60T 13/66**, B60T 13/58, B60T 8/18, B60T 8/26, B60T 10/00

(21) Anmeldenummer: **99111454.7**

(22) Anmeldetag: **12.06.1999**

(54) **Verfahren zur Steuerung der Bremsanlage eines Fahrzeugs**

Method of controlling a brake system of a vehicle

Procédé pour contrôler le système de freinage d'un véhicule

(84) Benannte Vertragsstaaten:
**DE FR GB IT NL SE**

(30) Priorität: **22.07.1998 DE 19832875**

(43) Veröffentlichungstag der Anmeldung:
**26.01.2000 Patentblatt 2000/04**

(73) Patentinhaber: **DaimlerChrysler AG**
**70567 Stuttgart (DE)**

(72) Erfinder: **Reiner, Michael**
**70736 Fellbach (DE)**

(56) Entgegenhaltungen:
EP-A- 0 689 978    WO-A-93/18949
DE-A- 19 604 391    DE-A- 19 822 859

**Beschreibung**

Die Erfindung betrifft ein Verfahren zur Steuerung der Bremsanlage eines Fahrzeugs nach dem Oberbegriff des Patentanspruchs 1.

Ein derartiges Verfahren geht beispielsweise aus der EP 0 831 252 A2 hervor, wobei die Betriebsbremse und der Retarder aufeinander abgestimmt angesteuert werden und die Betriebsbremse bei jedem Bremsvorgang aktiviert wird. Die Retarderansteuerung kann abhängig von einem Fahrerbremswunsch bzw. vom Straßenprofil erfolgen. Im ABS-Fall erfolgt die Absenkung der Dauerbremswirkung.

Die DE 196 04 391 A1 offenbart ein Verfahren, bei dem die Anteile der Betriebsbremse und der Dauerbremse, zum Beispiel einer Retarderbremse, aufeinander abgestimmt werden, wobei bei der Einstellung der Betriebsbremse das tatsächliche Bremsverhalten der Dauerbremse berücksichtigt wird. Bei diesem Verfahren werden darüber hinaus Betriebsgrößen des Fahrzeugs in Form von Achslastsignalen, der Fahrzeuggeschwindigkeit und dergleichen bei der Bestimmung der Dauerbremsen- und Betriebsbremsenanteile berücksichtigt.

Aufgabe der Erfindung ist es, das gattungsgemäße Verfahren zur Steuerung der Bremsanlage eines Fahrzeugs dahingehend weiterzubilden, daß eine verbesserte Anpassung der Bremswirkung an den Fahrbahnzustand erreicht werden kann.

Diese Aufgabe wird bei einem Verfahren zur Steuerung der Bremsanlage eines Fahrzeugs der eingangs genannten Art erfindungsgemäß dadurch gelöst, daß die Dauerbremse bei jedem Bremsvorgang aktiviert wird und abhängig vom Bremswunsch des Fahrers sowie von Fahrzustandsgrößen und/oder Fahrbahnzustandsgrößen und/oder Betriebszuständen des Fahrzeugs selbsttätig angesteuert wird (integrierte Betätigung der Dauerbremse).

Durch diese integrierte Betätigung der Dauerbremse wird eine Reduktion des Bremsanteils der Betriebsbremse erzielt, die zu einer geringeren Bauteilbeanspruchung und zu längeren Bremsbelagstandzeiten führt. Gleichzeitig wird durch die Ansteuerung der Dauerbremse abhängig von Fahrzustandsgrößen und/oder Fahrbahnzustandsgrößen und/oder Betriebszuständen des Fahrzeugs eine optimale Abstimmung der Bremswirkung der Betriebs- und Dauerbremse aufeinander erzielt. Insbesondere werden durch die Erfassung der Fahrbahnzustandsgrößen in der gebremsten und ungebremsten Fahrt auch Adhäsionsverhältnisse erfaßt und bei der Betätigung der Dauerbremse und der gleichzeitigen Betätigung der Betriebsbremse berücksichtigt.

Vorteilhafterweise wird zunächst die Betriebsbremse und erst daraufhin die Dauerbremse aktiviert, hierdurch ist insbesondere ein schnelles Ansprechen der Bremse bei einem Bremsvorgang gegeben. Bei sehr kritischen Straßenverhältnissen ist dabei bereits frühzeitig ein hoher Adhäsionsbedarf der Betriebsbremse alleine gegeben. In diesem Falle sind Dauerbremsanteile überhaupt nicht mehr zugelassen.

Weiter ist bei einem vorteilhaften Ausführungsbeispiel vorgesehen, daß die Dauerbremse und die Betriebsbremse so angesteuert werden, daß die durch die Betriebsbremse erzeugte Bremswirkung einen vorgegebenen Anteil der Gesamtbremswirkung bei jedem Bremsvorgang nicht unterschreitet. Hierdurch wird auf besonders vorteilhafte Weise ein Verglasen der Bremsbeläge verhindert. Dieser Mindestanteil ermöglicht auch ein spontanes Nachregeln schwankender Dauerbremswirkungen, beispielsweise während Getriebeschaltvorgängen. Der Verzögerungswunsch des Fahrers wird dabei stets eingehalten.

Des weiteren ist vorzugsweise vorgesehen, daß die Dauerbremse extern betätigbar ist. Die externe Betätigung durch den Fahrer hat immer Vorrang vor Anteilen der integrierten Betätigung. Die externe Betätigung wird daher generell als zusätzlicher Bremswunsch angesehen.

Besonders vorteilhaft ist es, daß die Adhäsionsverhältnisse erfaßt und der Dauerbremsanteil auf diese durch Bestimmung des Schlupfbedarfs der Dauerbremse abgestimmt wird. Durch diese Adhäsionsüberwachung wird die Bremswirkung der Dauerbremse wie auch der Betriebsbremse auf den Fahrbahnzustand angepaßt.

Ferner ist vorteilhafterweise vorgesehen, daß der Dauerbremsanteil auf den Beladungszustand des Fahrzeugs abgestimmt wird.

Als vorteilhaft erweist es sich bei dem erfindungsgemäßen Verfahren, daß auf eine mechanische Abschaltmöglichkeit der integrierten Dauerbremse verzichtet werden kann. Hierdurch können insbesondere Schalter, Schaltungen u.dgl. zur Abschaltung der Dauerbremse entfallen, was im Hinblick auf die Herstellung und insbesondere auch die Herstellungskosten besonders vorteilhaft ist.

Weitere Vorteile und Merkmale der Erfindung sind Gegenstand der nachfolgenden Beschreibung sowie der zeichnerischen Darstellung eines Ausführungsbeispiels.

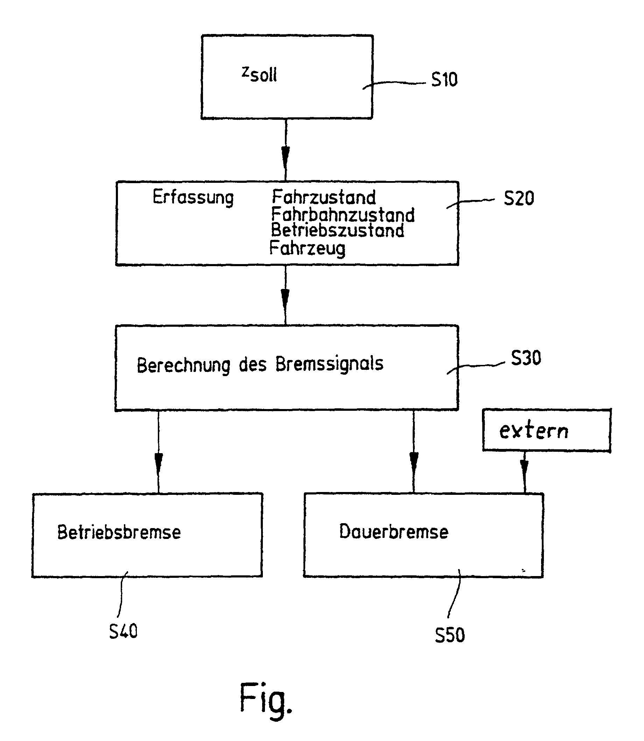

In der Figur ist schematisch ein Ablaufdiagramm eines von der Erfindung Gebrauch machenden Verfahrens dargestellt.

Wie aus der Figur hervorgeht, wird zunächst in Schnitt S10 der Bremswunsch des Fahrers über das Bremspedal $z_{soll}$ erfaßt. Neben dieser Erfassung des Bremswunsches des Fahrers wird in Schnitt S20 der Fahrzustand, der Fahrbahnzustand und der Betriebszustand des Fahrzeugs erfaßt und aus diesen Größen in Schnitt S30 ein Bremssignal zur Ansteuerung der Betriebsbremse und der Dauerbremse ermittelt in den Schnitten S40 und S50 und an die Betriebsbremse und Dauerbremse ausgegeben (integrierte Betätigung der Dauerbremse).

Dabei wird insbesondere überwacht, ob die Dauerbremse bereits extern betätigt wurde. Ist zu Beginn des Bremsvorgangs die Dauerbremse bereits extern betätigt worden, werden mit der Betriebsbremse keine weiteren Dauerbremsanteile aktiviert. In diesem Fall erfolgt keine Überlagerung externer und integrierter Dauerbremsanteile. Die Abbremsung durch die Betriebsbremse wird als zusätzlicher Bremswunsch des Fahrers zur bereits wirkenden Dauerbremse verstanden.

Wird hingegen während einer Bremsung mit integrierten Dauerbremsanteilen eine separate Betätigung der Dauerbremse, beispielsweise durch Betätigen des Tempomatschalters oder -hebels, vorgenommen, so wird das an die Dauerbremse ausgegebene Signal durch ein an die Betriebsbremse ausgegebenes Signal ersetzt, so daß der zusätzliche Bremswunsch des Fahrers überhaupt realisierbar ist. Wenn der separate Dauerbremsanteil zu einem zu hohen Schlupf, der über an sich bekannte Radsensoren erfaßt werden kann, führt, wird das an die Dauerbremse ausgegebene Signal ebenfalls derart verändert, daß der Dauerbremsanteil verringert wird.

Ferner wird als Betriebszustandsgröße des Fahrzeugs die Betätigung des Gaspedals erfaßt. Bei gleichzeitiger Betätigung von Gas- und Bremspedal wird der Dauerbremsanteil auf Null reduziert. Außerdem werden weitere Betriebszustandsgrößen des Fahrzeugs überwacht und zur Bestimmung der Dauerbremswirkung herangezogen. Fällt beispielsweise der Motor des Fahrzeugs aus, so werden die Dauerbremsanteile ebenfalls auf Null reduziert, da aus Sicherheitsgründen die Bremsanlage eines Fahrzeugs so konzipiert ist, daß bei Ausfall des Motors eine Abbremsung durch die Betriebsbremse stattfinden muß.

Es versteht sich, daß weiterhin die Fahrzeuggeschwindigkeit und die Achslastverteilung, die insbesondere auf den Beladungszustands des Fahrzeugs schließen lassen, und eventuell weitere relevante Fahrzustands- und Betriebszustandsgrößen erfaßt und für die Bestimmung der Dauerbrems- und Betriebsbremsanteile herangezogen werden. Zur Erfassung der Achslastverteilung ist dabei ein Achslastsensor oder dgl. überflüssig. Aus Motor- und Raddrehzahlsignalen, die ohnehin erfaßt werden, beispielsweise zur Realisierung eines Antiblockiersystems wird die Gesamtmasse durch Berechnung ermittelt. Hieraus werden Hinweise auf die Achslastanteile aus dem Raddrehzahlverhalten beim Bremsen mit der Betriebsbremse alleine und beim Anfahren bei ungebremster Fahrt mit Hilfe der angetriebenen und damit identisch mit der dauergebremsten Achse ermittelt. Das Raddrehzahlverhalten beim Bremsen mit der Betriebsbremse sowie beim Bremsen mit Dauerbremse erfolgt durch einen Lernvorgang.

Der Lernvorgang beim Bremsen mit der Betriebsbremse alleine geht beispielsweise aus der DE 38 29 951 C2, der EP 357983 B1, der DE 40 07 360 C2, der EP 445575 B1, auf die vorliegend Bezug genommen wird, hervor.

Die Lernphase beim Bremsen mit der Dauerbremse erfolgt bereits beim Anfahren mit der dauergebremsten Achse auf die folgende Weise:

Aus dem Verhältnis des Schlupfbedarfs zu der Antriebskraft an der Hinterachse wird eine "Kraftkonstante" $fk = \Delta ds/\Delta F_{HA}$ gebildet, wobei ds aus der Vorderachsgeschwindigkeit $V_{VA}$ und der Hinterachsgeschwindigkeit $V_{HA}$ wie folgt gebildet wird:

$$ds = V_{VA} - V_{HA}/V_{VA}.$$

Die Antriebs-/Dauerbremskraft an der Hinterachse $F_{HA}$ wird auf die folgende, in der DE 195 13 509 A1 und der EP 737608 A2 beschriebene Weise gebildet, wobei zur Erhöhung der Genauigkeit jedoch die rotierenden Massen des Motors und der Reifen berücksichtigt werden:

$$F_{HA} = u \cdot M_{mot} \cdot 1/\eta + (u^2 \cdot J_{mot} V \cdot k + m_{reif}) \cdot Z_{ist} \qquad [N]$$

mit:

$$Z_{DBI} = -F_{HA}/m \ [m/s^2]$$

mit:

| | | |
|---|---|---|
| $M_{mot}$ | [Nm] | motorseitiges Dauerbremsmoment |
| $J_{mot}$ | [kgm$^2$] | motorseitiges Massenträgheitsmoment |
| $\eta$ | [-] | Triebstrangwirkungsgrad |
| u | [1/m] | Übersetzung und "Umformung" M nach F |
| $F_{HA}$ | [N] | Antriebs-/Dauerbremskraft an HA |
| $m_{reif}$ | [kg) | Masse aller Räder |

(fortgesetzt)

| $z_{ist}$ | [m/s²] | Fahrzeugverzögerung (positiv) |
|---|---|---|
| m | [kg] | Fahrzeugmasse. |

Massenträgheitsmomente werden nur vereinfacht als Mittelwerte für eine ganze. Fahrzeugbaureihe angesetzt. Für die Bereifungsanteile wird beispielsweise ein mittlerer Reifen mit R_dyn = 500 mm angesetzt, wobei in Abhängigkeit von der berechneten Fahrzeugmasse m[t] nach der Formel $m_{reif}$ = 300x(1; m/15; 2) [kg] mindestens 6 Reifen (4x2) und maximal 12 Reifen (4x2 mit 3-Achs Anhängefahrzeug) auch Zugkombintaionen ganz grob berücksichtigt werden. Auf gelenkwellenseitige Anteile wird verzichtet. Für die motorseitigen, übersetzungsabhängigen Anteile wird ein der Fahrzeugbaureihe angepaßtes mittleres Massenträgheitsmoment angenommen. Die Übersetzung bzw. "Umformung" motorseitiger Momente in Bremskräfte am Rad erfolgt wie aus dem Stand der Technik bekannt bei der Massenberechnung mit u = 0,3777 x $n_{mot}/V_{HA}$ [1/m].

mit:

$n_{mot}$ [1/min] Motordrehzahl

0,377[-] Umnorminierungskonstante.

Da die motorseitigen Massenträgheitsmomente nur bei geschlossener Kupplung wirken können, wird in diesem Falle k = 1 gesetzt. Bei geöffneter Kupplung oder unabhängig vom Kupplungssignal wird bei $M_{mot}$ < 50 Nm k = 0 gesetzt.

Wenn fk bekannt ist, kann aus dem beim Bremsen gewünschten bzw. hergeleiteten Abbremsungsanteil der Dauerbremse über die Beziehung F = m·a, d.h. $F_{HA}$ = m·$z_{DBI}$ die gewünschte Antriebskraft bestimmt werden und über ds = fk·$F_{HA}$ der dafür benötigte Schlupf vorausbestimmt werden. Wenn z.B. ein zu hoher Schlupfbedarf ermittelt wird, kann auf Basis eines unkritischen Grenzschlupfes der dann maximal mögliche Dauerbremsanteil bestimmt werden.

Der Abbremsungsanteil der Dauerbremse $z_{DBI}$ läßt sich bei bereits bekannter Fahrzeugmasse dabei wie folgt ermitteln: $z_{DBI}$ = $F_{HA}$/m [m/s²],

wobei hier m die Fahrzeugmasse in kg ist.

Nachdem auf diese Weise die Adhäsionsverhältnisse durch Vorausbestimmung des Schlupfbedarfs der dauergebremsten Achse mit Hilfe bereits beim Anfahren ermittelter Größen erfaßt werden und der Dauerbremsanteil auf diese durch Vorausbestimmung des Schlupfbedarfs der Dauerbremse abgestimmt wird, kann daraufhin die integrierte Betätigung der Dauerbremse erfolgen, vorausgesetzt, die erfaßten Adhäsionsverhältnisse lassen auf kein kritisches Fahrzeug schließen. So werden in der Regel bei leeren Fahrzeugen mit geringen Hinterachslastanteilen, insbesondere bei abgesattelten Sattelzügen grundsätzlich keine integrierten Betätigungen der Dauerbremse durchgeführt. Dies ist deshalb auch unproblematisch, weil bei leeren Fahrzeugen eine Reduktion des Bremsbelagverschleißes ohnehin nicht relevant ist.

Darüber hinaus werden die Dauerbremsanteile bei schneller Pedalbetätigung des Bremspedals, die zu einer Auslösung des an sich bekannten Bremsassistenten führt, ebenfalls auf Null reduziert.

Von besonderem Vorteil ist auch, daß durch die Überwachung und Pedalbetätigung des Bremspedals, die zu einer Auslösung des an sich bekannten Bremsassistenten führt, ebenfalls auf Null reduziert.

Von besonderem Vorteil ist auch, daß durch die Überwachung und Erfassung der Adhäsionsverhältnisse und die Vorausbestimmung des Schlupfbedarfs der Dauerbremse eine Reduktion der Dauerbremsanteile oder gar ein Abschalten der Dauerbremse bei kritischen Fahrzustandsverhältnissen realisierbar ist. Eine mechanische Abschaltmöglichkeit durch den Fahrer, wie sie bei aus dem Stand der Technik bekannten Bremsanlagen üblich ist, wird dadurch entbehrlich, was zu einer Kostenersparnis führt.

Bei einer integrierten Betätigung der Dauerbremse wird die Bremswirkung kontinuierlich überwacht und die Signale zur Ansteuerung der Betriebsbremse und die Signale zur Ansteuerung der Dauerbremse werden abhängig von dieser erfaßten Bremswirkung aufeinander abgestimmt. Die Abstimmung erfolgt dabei so, daß ein gewisses Überbremsen der dauergebremsten Hinterachse in Kauf genommen wird, weil für eine optimale Adhäsion, d.h. keine Schlupfdifferenz zwischen den Achsen, zu viel Bremsarbeit von der Vorderachse übernommen werden müßte. In diesem Falle würde eine gewünschte Belagsverschleißharmonisierung nicht eintreten. Das Maß für die Überbremsung der Hinterachse, die bei integrierter Betätigung der Dauerbremse erfolgt, läßt sich aus den an sich bekannten Rückregelgrenzen bei separater Betätigung der Dauerbremse ableiten. Dabei ist vorgesehen, daß bei integrierter Betätigung der Dauerbremse nur ein Teil des zulässigen Schlupfes ausgenutzt wird, der bei separater Betätigung der Dauerbremse entsteht. Der Dauerbremsanteil wird dabei im Vergleich zu dem Betriebsbremsanteil so eingeregelt, daß eine optimale Bremswirkung entsteht, ohne daß insbesondere auf winterlichen Straßen adhäsionskritische Bremsungen erfolgen. Gegebenenfalls wird der Dauerbremsanteil auf Null reduziert, wenn dies die Fahrbahnverhältnisse erfordern.

Es versteht sich, daß die integrierte Betätigung der Dauerbremse abhängig von den Stufen der Dauerbremse auf die Betätigung der Betriebsbremse abgestimmt erfolgt. Das obenbeschriebene Verfahren zur Steuerung der Bremsanlage sieht darüber hinaus vor, daß bei jedem Bremsvorgang immer eine Betätigung der Betriebsbremse erfolgt. Bei jedem Bremsvorgang wird sofort die Betriebsbremse aktiviert und erst dann zeitverzögert die integrierte Betätigung der Dauerbremse vorgenommen. Es muß darüber hinaus immer ein Mindestbremsanteil der Betriebsbremse sichergestellt sein, bevor eine integrierte Betätigung der Dauerbremse vorgegeben wird. Hierdurch wird eine Verglasungsgefahr der Bremsbeläge vermieden.

Bei einem Anhängerbetrieb des Fahrzeugs kann der Anteil der Dauerbremse auf die nachfolgend beschriebene Weise von dem Sollwert des Bremsvorgangs subtrahiert werden. Der so erhaltene "Rest" gilt in gleicher Weise für die Betriebsbremsen von Zug- und Anhängefahrzeugen.

## Patentansprüche

1. Verfahren zur Steuerung der Bremsanlage eines Fahrzeugs mit einer steuerbaren Betriebsbremse und einer steuerbaren Dauerbremse, wobei die Betriebs- und Dauerbremse aufeinander abgestimmt angesteuert werden, wobei die Dauerbremse bei jedem Bremsvorgang aktiviert wird und abhängig vom Bremswunsch des Fahrers sowie von Fahrzustandsgrößen und Fahrbahnzustandsgrößen und Betriebszuständen des Fahrzeugs angesteuert wird, **dadurch gekennzeichnet, daß** die Adhäsionsverhältnisse erfaßt werden und der Dauerbremsanteil durch Bestimmung des Schlupfbedarfs der Dauerbremse auf die Adhäsionsverhältnisse abgestimmt wird.

2. Verfahren nach Anspruch 1, **dadurch gekennzeichnet, daß** zunächst die Betriebsbremse und erst daraufhin die Dauerbremse aktiviert wird.

3. Verfahren nach Anspruch 1 oder 2, **dadurch gekennzeichnet, daß** die Dauerbremse und die Betriebsbremse so angesteuert werden, daß die durch die Betriebsbremse erzeugte Bremswirkung einen vorgegebenen Anteil der Gesamtbremswirkung bei jedem Bremsvorgang nicht unterschreitet.

4. Verfahren nach einem der Ansprüche 1 bis 3, **dadurch gekennzeichnet, daß** die Dauerbremse extern betätigbar ist, wobei die externe Betätigung immer Vorrang vor einer integrierten Betätigung hat.

5. Verfahren nach einem der Ansprüche 1 bis 4, **dadurch gekennzeichnet, daß** der Dauerbremsanteil auf den Beladungszustand des Fahrzeugs abgestimmt wird.

6. Verfahren nach einem der Ansprüche 1 bis 5, **dadurch gekennzeichnet, daß** auf eine mechanische Abschaltmöglichkeit der integrierten Dauerbremse verzichtet wird.

## Claims

1. Method for controlling the braking system of a vehicle with a controllable operating brake and a controllable permanent brake, in which the operating and permanent brakes are controlled in coordination with one another, such that the permanent brake is actuated whenever a braking process occurs and is controlled as a function of the driver's wishes and of vehicle condition parameters, road condition parameters and vehicle operation parameters, **characterised in that** the road grip situation is detected and the permanent brake's contribution is matched to the road grip situation by determination of the slip requirement of the permanent brake.

2. Method according to Claim 1, **characterised in that** the operating brake is actuated first and only then is the permanent brake actuated.

3. Method according to Claims 1 or 2, **characterised in that** the permanent brake and the operating brake are controlled in such manner that the braking effect produced by the operating brake is not less than a predetermined fraction of the total braking effect during any braking process.

4. brake can be actuated externally, and the external actuation always takes precedence over any integrated actuation.

**5.** Method according to any of Claims I to 4,
**characterised in that**
the permanent brake's contribution is matched to the loading condition of the vehicle.

**6.** Method according to any of Claims 1 to 5,
**characterised in that**
no provision is made for mechanically turning off the integrated permanent brake.

## Revendications

**1.** Procédé de commande du système de freinage d'un véhicule, muni d'un frein de service ou principal et d'un frein de service continu ou ralentisseur pouvant être commandé, le frein principal et le frein ralentisseur étant commandés de façon mutuellement adaptée, le frein ralentisseur étant activé à chaque processus de freinage et en fonction du souhait de freinage émanant du conducteur, ainsi que de grandeurs d'état de roulage et de grandeurs d'état de la piste de roulement et étant commandé en fonction de l'état de fonctionnement du véhicule, **caractérisé en ce que** les conditions d'adhérence sont détectées et l'importance du frein ralentisseur est adaptée aux conditions d'adhérence, par détermination du besoin en glissement du frein ralentisseur.

**2.** Procédé selon la revendication 1, **caractérisé en ce que** l'on active d'abord le frein principal, puis le frein ralentisseur.

**3.** Procédé selon la revendication 1 ou 2, **caractérisé en ce que** le frein ralentisseur et le frein principal sont commandés de manière que l'effet de freinage généré par le frein principal ne descende pas au-dessous d'un pourcentage prédéterminé de l'effet de freinage global à chaque processus de freinage.

**4.** Procédé selon l'une des revendications 1 à 3, **caractérisé en ce que** le frein ralentisseur est susceptible d'être actionné de façon externe, l'actionnement externe ayant toujours priorité face à un actionnement intégré.

**5.** Procédé selon l'une des revendications 1 à 4, **caractérisé en ce que** la proportion de freinage ralentisseur est accordée à l'état de charge du véhicule.

**6.** Procédé selon l'une des revendications 1 à 5, **caractérisé en ce que** l'on renonce à une possibilité de mise hors service mécanique du frein ralentisseur intégré.

Fig.